# EUROPÄISCHE PATENTSCHRIFT

(11) **EP 2 927 016 B1**
(45) Veröffentlichungstag und Bekanntmachung des Hinweises auf die Patenterteilung: **25.10.2017**
(21) Anmeldenummer: 14001251.9
(22) Anmeldetag: 04.04.2014
(51) Int. Cl.: B44C 1/26, B29C 67/00, B44C 5/04, E04F 13/00, E04F 15/00

(54) **Verfahren zum Herstellen eines dekorativen Paneels**
Method for manufacturing a decorative panel
Procédé de fabrication d'un panneau décoratif

(43) Veröffentlichungstag der Anmeldung: 07.10.2015
(73) Patentinhaber: Flooring Technologies Ltd., Kalkara SCM 1001 (MT)
(72) Erfinder: Hecht, Hendrik, DE - 16816 Buskow (DE)
(74) Vertreter: Friedrich, Andreas

(56) Entgegenhaltungen:
- GB-A- 2 127 353
- GB-A- 2 430 408
- US-A- 5 697 413
- US-A1- 2003 186 042
- US-A1- 2010 047 722
- US-A1- 2013 170 171

## Beschreibung

Die Erfindung betrifft ein Verfahren zum Herstellen eines dekorativen Paneels, insbesondere eines Fußbodenpaneels, das einen Kern mit einer Kernoberseite aufweist.

Dekorative Paneele, insbesondere Fußbodenpaneele, werden heute oftmals eingesetzt, um teure Materialien zu ersetzen und zu imitieren und/oder besondere dekorative Effekte hervorzurufen. Gleichzeitig müssen sie eine Vielzahl von Eigenschaften aufweisen, die vom jeweiligen Einsatzzweck des dekorativen Paneels abhängen und beispielsweise eine erhöhte Abriebfestigkeit, elektrostatische Eigenschaften oder eine antibakterielle Wirkung umfassen können. Derartige dekorative Paneele, insbesondere Fußbodenpaneele, verfügen dabei über einen Kern, der oftmals aus einer Holzwerkstoffplatte, beispielsweise einer mitteldichten Faserplatte (MDF) oder einer hochdichten Faserplatte (HDF), besteht. Natürlich können auch andere Materialien als Kern verwendet werden, beispielsweise Kunststoffe, oriented strand boards (OSB) oder Werkstoffverbundmaterialien. Der Kern kann dabei eine oder mehrere Beschichtungen auf einer oder mehrerer seiner Seitenflächen aufweisen, wie beispielsweise eine Dekorschicht, eine entsprechende Grundierung oder einen Gegenzug. Dabei sind oftmals die in Form eines Farbdruckes aufgebrachten Dekorschichten nicht ausreichend, um die gewünschten dekorativen Effekte hervorrufen zu können. Aus der EP 2 452 815 A1 ist es daher bekannt, in Vertiefungen auf der Oberseite einer als Kern verwendeten Holzwerkstoffplatte Elemente einzusetzen, die beispielsweise aus Metall, Kunststoff oder Glas bestehen können. Derartige Elemente werden vorgefertigt und anschließend mit einem Klebstoff in der dafür vorgesehenen Vertiefungen in der Oberseite des Kerns eingesetzt. Nachteilig ist jedoch, dass eine Vielzahl unterschiedlicher Elemente vorgehalten werden muss, dass Fertigungstoleranzen nicht ausgeglichen werden können, dass eine Umrüstung auf andere dekorative Motive nur bedingt möglich ist und dass zudem gegebenenfalls umwelt- und/oder gesundheitsbelastende Klebstoffe verwendet werden müssen, um die Elemente am Kern zu befestigen. Der Erfindung liegt daher die Aufgabe zugrunde ein Herstellungsverfahren zum Herstellen eines dekorativen Paneels, insbesondere eines Fußbodenpaneels, so weiter zu entwickeln, dass die Nachteile aus dem Stand der Technik behoben werden. Aus der GB 2 430 408 A ist ein Verfahren gemäß dem Oberbegriff von Anspruch 1 bekannt. Die Erfindung löst die gestellte Aufgabe durch ein Verfahren zum Herstellen eines dekorativen Paneels insbesondere eines Fußbodenpaneels, das einen Kern mit einer Kernoberseite aufweist, wobei sich das Verfahren durch die folgenden Schritte auszeichnet:
a Bereitstellen eines Kernes, der in der Kernoberseite wenigstens eine Vertiefung aufweist
b Einbringen eines Füllelementes in die wenigstens eine Vertiefung mittels eines 3D-Druckers.

Unter einem 3D-Drucker wird dabei insbesondere eine Vorrichtung verstanden, die dreidimensionale Werkstücke aufbauen kann. Mithilfe wenigstens eines Druckkopfes wird ein Füllmaterial in einer bestimmten Menge und Position in die Vertiefung eingebracht, wo es aushärtet oder ausgehärtet wird. Mittels des 3D-Druckers können unterschiedlichste Füllelemente mit unterschiedlichen Formen, Größen und/oder Strukturen in die jeweilige Vertiefung eingebracht werden. Werden beispielsweise in die Oberseite des Kerns mehrere gegebenenfalls unterschiedliche geformte Vertiefungen eingebracht, in die jeweils ein Füllelement aus einem Füllmaterial eingebracht werden soll, ist dies mittels des 3D-Druckers einfach und ohne das Vorhalten fertig ausgeformter Füllelemente möglich. Durch den 3D-Drucker kann die Position, Gestalt, Dicke und/oder Struktur des jeweiligen Füllelementes individuell eingestellt werden. Dadurch ist es nicht nötig, eine Vielzahl unterschiedlich geformter Füllelemente vorzuhalten oder darauf zu achten, die unterschiedlichen Füllelementen in der richtigen Orientierung in die jeweils richtige Vertiefung einzusetzen. Ein Wechsel auf unterschiedliche Designs oder unterschiedliche Positionierungen oder Ausgestaltungen der unterschiedlichen Formelemente kann auf diese Weise besonders einfach, schnell und damit kostengünstig erfolgen.

In einer bevorzugten Ausgestaltung des Verfahrens weist das jeweilige Füllelement eine Elementenoberseite auf, die zumindest teilweise bündig mit der Kernoberseite abschließt oder aus ihr hervorragt. Dabei kann beispielsweise über Sensoren überprüft werden, ob und gegebenenfalls wie weit die bereits eingebrachte Menge des Füllmaterials, aus dem das Füllelement gebildet wird, über die Kernoberseite hervorragt, oder ob das Füllmaterial mit der Kernoberseite bereits bündig abschließt. Dies kann beispielsweise über speziell dafür vorgesehene Sensoren ermittelt und an die elektronische Steuerung, die auch den 3D-Drucker steuert, übermittelt werden. Damit können gegebenenfalls auftretende Fertigungstoleranzen und/oder Ungenauigkeiten bei der Tiefe der in die Kernoberseite eingebrachten wenigstens einen Vertiefung ausgeglichen und gegebenenfalls behoben werden. Auch dies ist mit vorgefertigten Füllelementen, die nur noch in die Vertiefung eingesetzt werden müssen, nicht möglich.

Vorteilhafterweise wird die wenigstens eine Vertiefung in die Kernoberseite eingeprägt oder eingefräst. Insbesondere bei Holzwerkstoffpaneelen, beispielsweise Fußbodenpaneelen, ist es heute aus dem Stand der Technik bekannt, die Oberseite, die beispielsweise durch eine Abdeck- oder Nutzschicht gebildet wird, mit einer Struktur zu versehen. Diese kann beispielsweise dekorsynchron mit einem darunter liegenden Dekor ausgebildet werden, um beispielsweise teure Werkstoffe, wie beispielsweise Echtholz oder Stein, nicht nur optisch, sondern auch haptisch zu imitieren. Insbesondere in diese dekorsynchronen Strukturen, die durch ein Verfahren erzeugt werden können, das als "Registered Embossing" bekannt ist, können die Füllelemente mittels des 3D-Druckers eingebracht werden. Auf diese Weise lassen sich beispielsweise Fliesenfugen nachahmen oder andere optische und dekorative Effekte erzeugen.

Das Einprägen einer Struktur in die Kernoberseite ist jedoch insbesondere für wenig tiefe Strukturen von Vorteil. Soll die Vertiefung eine gewisse Mindesttiefe überschreiten, ist es von Vorteil, die Vertiefung in die Kernoberseite einzufräsen. Dies können unterschiedlichste dekorative Elemente, wie beispielsweise Blüten, andere florale Elemente, Blätter oder sonstige Fantasiedekore sein. Wird als Fräse beispielsweise eine CNC-Fräse oder eine sonstige computergesteuerte Fräse verwendet, lässt sich praktisch jedes Fußbodenpaneel oder dekorative Paneel individuell dekorativ gestalten, da sowohl die Position, Größe, Gestalt und Orientierung der Vertiefung durch die computergesteuerte Fräse individuell gesteuert werden kann als auch das Füllelement durch den 3D-Drucker individuell an diese Eigenschaften der Vertiefung angepasst werden kann. Vorteilhafterweise ist eine Vorrichtung zum Durchführen des Verfahrens, beispielsweise der 3D-Drucker selbst, bereits mit einer Erkennungseinrichtung, die beispielsweise eine Kamera mit einer entsprechenden Bilderkennungssoftware ist, ausgestattet, um die benötigten Eigenschaften der Vertiefung erkennen und bestimmen zu können und so den 3D-Drucker entsprechend zu steuern, dass genau die erkannten Vertiefungen im gewünschten Maße mit einem Füllelement ausgefüllt werden können. Dies ist insbesondere für die Fertigung von Kleinserien an Paneelen und beispielsweise individuellen Einzelstücken von Vorteil.

Als vorteilhaft hat sich herausgestellt, wenn die Elementenoberseite mittels des 3D-Druckers strukturiert wird. Da 3D-Drucker in der Lage sind, dreidimensionale Werkstücke aufzubauen, sind sie auch geeignet, um unterschiedlichste Oberflächenstrukturen an der Elementenoberseite zu generieren.

In einer vorteilhaften Ausgestaltung wird das Füllelement zumindest teilweise mit wenigstens einer Materialschicht abgedeckt. Dies kann geschehen, um besondere optische Effekte hervorzurufen oder um zumindest in Teilen eine Funktions- oder Nutzschicht auf das Füllelement aufzubringen. So ist es beispielsweise denkbar, in die Oberseite des Füllelementes ein Relief oder eine Struktur insbesondere mit dem 3D-Drucker einzubringen und beispielsweise die Teile der Elementenoberfläche mit einer Schutz- oder Vergütungsschicht zu versehen, die am weitesten "nach oben" hervorstehen. Diese sind insbesondere bei der Verwendung des dekorativen Paneels als Fußbodenpaneel besonderen Belastungen ausgesetzt, so dass beispielsweise eine Funktionsschicht sinnvoll ist, die die Vergütung erhöht und beispielsweise eine größere Abriebbeständigkeit gewährleistet. In anderen Teilen eines derartig aufgebrachten Reliefs oder einer Struktur können beispielsweise Metallschichten aufgebracht werden, um elektrische Spannungen abzuleiten und so einen antistatischen Fußboden bzw. eine antistatisches dekoratives Paneel, zu erzeugen. Auch hier ist es von Vorteil, Teile der Elementenoberseite mit der Materialschicht, in diesem Fall also der Metallschicht zu überziehen.

Vorteilhafterweise wird diese wenigstens eine Materialschicht mittels eines 3D-Druckers aufgebracht. Dabei kann es sich um den gleichen 3D-Drucker handeln, der bereits das Füllelement in die Vertiefung eingebracht hat. Alternativ kann auch ein zusätzlicher 3D-Drucker vorgesehen sein. Vorteilhafterweise verfügt der 3D-Drucker über mehrere Druckköpfe, damit unterschiedliche Materialien durch unterschiedliche Druckköpfe aufgebracht werden können. Dadurch werden Verunreinigungen vermieden, der Prozessablauf beschleunigt und gleichzeitig die Qualität des aufgebrachten Füllelementes und die Reinheit der unterschiedlichen Materialschichten erhöht.

Vorzugsweise wird für das Füllelement ein Füllmaterial verwendet, das Glas, Keramik, Kunststoff, Kunstharz, Metall und/oder flüssiges Holz aufweist. Flüssiges Holz oder "Flüssigholz" oder "Liquid Wood" ist ein Biowerkstoff, der hauptsächlich aus Holzbestandteilen Lignin und Zellulose hergestellt wird. Alle diese Materialien haben unterschiedliche Eigenschaften und unterschiedliche optische Eindrücke, so dass eine Vielzahl verschiedener Effekte erreicht werden kann. Natürlich ist es auch möglich, unterschiedliche Materialien als Füllmaterial zu verwenden oder beispielsweise Füllelemente herzustellen, die teilweise aus einem und teilweise aus einem anderen Material bestehen. Hierfür sind Vorteilhafterweise mehrere 3D-Drucker oder ein 3D-Drucker mit mehreren Druckköpfen vorhanden. Die unterschiedlichen Bauteile können nahezu beliebig kombiniert und in ihren Eigenschaften ergänzt werden.

In einer vorteilhaften Ausgestaltung des Verfahrens wird die Kernoberseite und/oder die Elementenoberseite mit wenigstens einer Funktionsschicht beschichtet, die mit elektrischen Anschlüssen versehen wird. Es kann sich dabei beispielsweise um eine semitransparente leuchtende Folie handeln, die beispielsweise im flüssigen Zustand aufgebracht wird. Wird an die elektrischen Anschlüsse eine elektrische Spannung eingelegt, leuchten derartige Folien auf, so dass sie neuen Funktionen für die dekorativen Paneele, insbesondere Fußbodenpaneele, möglich machen. So ist es beispielsweise denkbar, tagsüber das dekorative Paneel mit beispielsweise einer aufgebrachten Dekorschicht zu nutzen, so dass tagsüber das normale Dekor zu sehen ist. Abends oder nachts kann beispielsweise die Funktionsschicht über die elektrischen Anschlüsse mit einer elektrischen Spannung versehen werden, so dass sie aufleuchtet und zum einen ein anderen optischen Gesamteindruck aufweist und zum anderen als zusätzliche Lichtquelle verwendbar ist.

Vorteilhafterweise wird in die wenigstens eine Vertiefung wenigstens ein Funktionselement positioniert, bevor das Füllelement eingebracht wird. Ein derartiges Funktionselement kann dabei auf unterschiedlichste Weise ausgebildet sein. Insbesondere elektrische und/oder elektronische Funktionselemente können auf diese Weise besonders gut in das dekorative Paneel integriert werden, da insbesondere eine oftmals optisch nicht ansprechende und störend wirkende Verkabelung oder sonstige elektrische und/oder elektronische Anschlüsse durch das später eingebrachte Füllelement abgedeckt werden können und somit am fertigen Paneel nicht erkennbar sind.

In einer bevorzugten Ausgestaltung des Verfahrens weist das wenigstens eine Funktionselement wenigstens ein Beleuchtungselement auf, das mit elektrischen Anschlüssen versehen wird. Auch hier lassen sich die optisch wenig ansprechenden elektrischen Anschlüsse beispielsweise unter dem oder in dem später eingebrachten Füllelement verstecken, so dass nur die Beleuchtungselemente am fertigen Paneel erkennbar sind. Die Beleuchtungselemente können beispielsweise Teile eines Raumes, in dem das dekorative Paneel beispielsweise als Wand- oder Deckenverkleidung verwendet wird, großflächig beleuchten.

In vielen Innenräumen aber auch an Fassaden von Gebäuden werden heute Beleuchtungselemente, beispielsweise Halogen- oder LED-Strahler in Wand-und/oder Deckenverkleidungen integriert. Dies geschieht jedoch in der Regel nachträglich, so dass zunächst Aussparungen in den Verkleidungen vorgesehen oder erst noch eingebracht werden müssen, in die später die Leuchtmittel und die dafür benötigten elektrischen Anschlüsse, Fassungen und weitere Bauteile eingebracht werden müssen. Hier muss einerseits sorgfältig gearbeitet werden, um die benötigte Aussparung groß genug aber auch nicht größer als notwendig auszubilden. Zudem sind eine Vielzahl unterschiedlicher Arbeitsschritte nötig und die Positionierung und Anordnung der unterschiedlichen Beleuchtungselemente muss gut geplant sein, um hinter oder unter einer entsprechenden Verkleidung die benötigten oder sonstigen Verbindungen entlang zuführen. Werden hingegen Beleuchtungselemente direkt in das dekorative Paneel integriert, fallen einerseits eine Vielzahl unterschiedlicher Arbeitsschritte weg, so dass der Einbau selbst deutlich schneller stattfinden kann und andererseits ist es nicht mehr nötig, störende Verbindungen, elektrische Zu- oder Ableitungen oder Fassungen für Leuchtmittel aufwändig zu verstecken.

Als besonders vorteilhaft hat sich herausgestellt, wenn das wenigstens eine Beleuchtungselement eine Leuchtdiode (LED) und/oder eine organische Leuchtdiode (OLED) aufweist. Auch diese Dioden sind heute in Form von Strahlern oder sonstigen Beleuchtungseinrichtungen im Einsatz, um Räume oder Außenfassaden von Gebäuden auszuleuchten. Durch die Verwendung als Beleuchtungselement in Form von Funktionselementen in einem dekorativen Paneel lassen sie sich jedoch auch innerhalb des Paneels akzentuierte Beleuchtungen beispielsweise von bestimmten Dekorelementen auf der Oberseite des Paneels erreichen.

Vorteilhafterweise weist das wenigstens eine Funktionselement wenigstens einen Sensor, insbesondere wenigstens einen Drucksensor, auf. Natürlich sind unterschiedlichste elektrische und/oder elektronische Funktionselemente denkbar. Insbesondere die Verwendung von Drucksensoren eröffnet eine Vielzahl von Möglichkeiten. So ist es beispielsweise möglich, das dekorative Paneel als Fußbodenpaneel zu verwenden und so beispielsweise Beleuchtungseinrichtungen an- beziehungsweise abzuschalten, wenn eine Person über diese Fußbodenpaneele geht und beispielsweise einen Raum betritt oder ihn verlässt. Werden dekorative Paneele mit derartigen Funktionselementen mit Paneelen kombiniert, die über Beleuchtungseinrichtungen oder beispielsweise die bereits beschriebene leuchtfähige Schicht verfügen, können Räume beispielsweise vollständig beleuchtet werden, ohne das zusätzliche Lampen oder Leuchten nötig werden. Durch die Steuerung über im Paneel als Funktionselement enthaltene Sensoren lässt sich der Energie- und Strombedarf deutlich reduzieren, was insbesondere für öffentliche Gebäude wie beispielsweise Museen, von Vorteil ist.

Durch die Ausgestaltung der dekorativen Paneele ist es möglich, beispielsweise Füllelemente in Form von Dekorelementen anzuordnen, die aus unterschiedlichen Betrachtungswinkeln unterschiedliche optische Eigenschaften, insbesondere unterschiedliche Dekore aufweisen. Diese können nach Art eines "Flip-Flops" ausgebildet sein, und beispielsweise aus einer bestimmten Betrachtungsrichtung bzw. einem bestimmten Betrachtungswinkel sichtbar sein, während sie aus einem anderen Betrachtungswinkel nahezu oder vollständig unsichtbar sind.

Mithilfe der beigefügten Zeichnungen wird nachfolgend ein Ausführungsbeispiel der vorliegenden Erfindung näher erläutert. Es zeigt
- Figur 1: - eine schematische dreidimensionale Ansicht eines dekorativen Paneels in einer Explosionsdarstellung und
- Figur 2: - einen Schnitt durch die in Figur 1 dargestellte Anordnung.

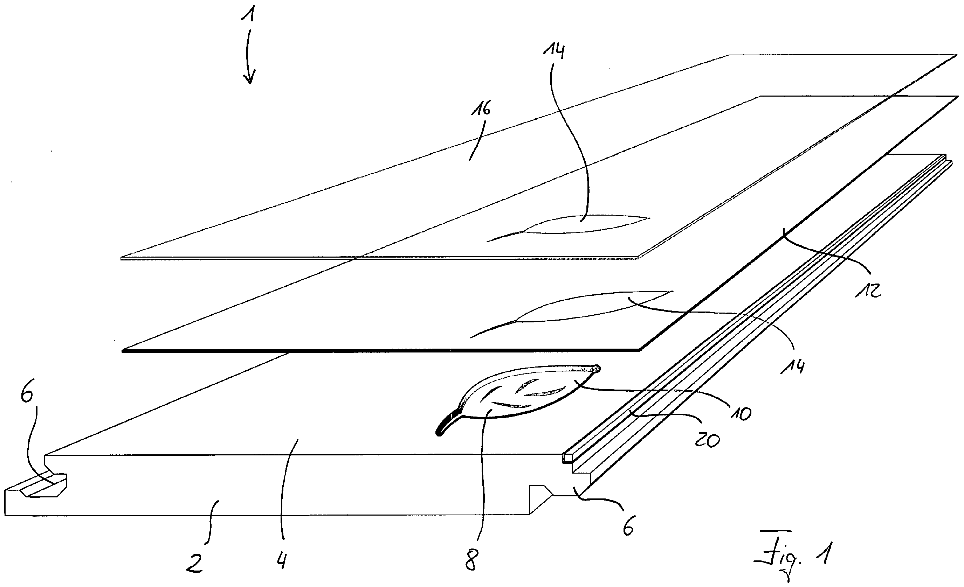

Figur 1 zeigt ein dekoratives Paneel 1 in einer schematischen 3D-Ansicht in einer Explosionsdarstellung. Das Paneel 1 verfügt über einen Kern 2, der eine Kernoberseite 4 aufweist. An zwei Seitenflächen des Kerns 2 sind Verriegelungselemente 6 angeordnet, mit denen zwei Paneele 1 miteinander verbunden werden können. In der Kernoberseite befindet sich eine Vertiefung 8, in der sich im in Figur 1 gezeigten Ausführungsbeispiel bereits ein Füllelement 10 befindet.

Die Kernoberseite 4 wird mit einem Dekor 12 abgedeckt, das im gezeigten Ausführungsbeispiel eine Echtholzoberfläche imitieren soll. Das Dekor 12 wird im gezeigten Ausführungsbeispiel vollflächig auf die Kernoberseite 4 aufgebracht, wobei lediglich eine Aussparung 14 vorhanden ist, die deckungsgleich mit der Vertiefung 8 ist, sodass weder auf die Vertiefung 8 noch auf das Füllelement 10 ein Dekor 12 aufgebracht wird.

Das Dekor 12 wird mit einem Overlay 16 abgedeckt, das eine dekorsynchrone Struktur 18 aufweist. Die Struktur 18 ist passend auf das Dekor 12 abgestimmt, so dass der optische und haptische Gesamteindruck denen des zu imitierenden Werkstoffs angepasst ist. Auch das Overlay 16 verfügt über eine Aussparung 14, die dafür sorgt, dass das in die Vertiefung 8 eingesetzte Füllelement 10 nicht mit dem Overlay 16 abgedeckt wird.

Wie bereits dargelegt, wird das Füllelement 10 mittels eines 3D-Druckers in die Kernoberseite eingebracht. Dies kann vor dem Aufbringen des Dekors 12 und des Overlays 16 geschehen. Alternativ dazu kann auch zunächst das Dekor 12 auf die Kernoberseite 4 und anschließend das Overlay 16 auf das Dekor 12 aufgebracht werden, bevor das Füllelement 10 in die Vertiefung 8 eingebracht wird.

An dem in Figur 1 rechts dargestellten Verriegelungselement 6 ist zudem zu erkennen, dass das Paneel 1 über einen Keder 20 verfügt, der im gezeigten Ausführungsbeispiel entlang der gesamten Seitenkante des Paneels 1 verläuft. Auch dieser kann als Füllelement 10 ausgebildet sein, der in eine dafür vorgesehenen Vertiefung eingelassen ist und beispielsweise mittels des 3D-Druckers hergestellt wird.

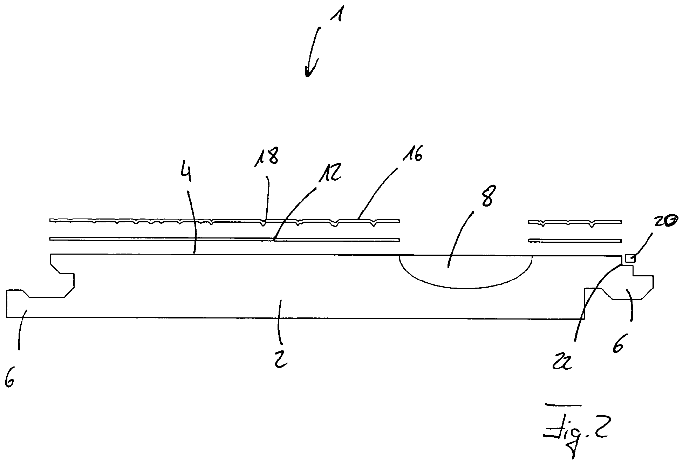

Figur 2 zeigt eine Schnittdarstellung durch die in Figur 1 gezeigte Anordnung. Das Paneel 1 verfügt über den Kern 2, an dessen in Figur 2 rechter und linker Seite die Verriegelungselemente 6 positioniert sind. Im rechten Verriegelungselement 6 ist dabei eine Rille 22 angeordnet, in die der Keder 20 eingebracht ist. Der Kern 2 verfügt über eine Kernoberseite 4, in der sich die Vertiefung 8 befindet. Im in Figur 2 gezeigten Ausführungsbeispiel befindet sich darin noch kein Füllelement 10, das über einen 3D-Drucker zu einem späteren Zeitpunkt eingebracht wird. Die Kernoberseite 4 wird durch das Dekor 12 und das Overlay 16 abgedeckt, in dem sich eine dekorsynchrone Struktur 18 befindet. Das Overlay 16 kann beispielsweise als Overlaypapier oder als in eine im flüssigen oder festen Zustand aufgetragene Beschichtung ausgebildet sein.

### Bezugszeichenliste

- 1: Paneel
- 2: Kern
- 4: Kernoberseite
- 6: Verriegelungselement
- 8: Vertiefung
- 10: Füllelement
- 12: Dekor
- 14: Aussparung
- 16: Overlay
- 18: Struktur
- 20: Keder
- 22: Rille

## Patentansprüche

1. Verfahren zum Herstellen eines dekorativen Paneels (1), insbesondere eines Fußbodenpaneels, das einen Kern (2) mit einer Kernoberseite (4) aufweist, aufweisend die Schritte:
a) Bereitstellen eines Kernes (2), der in der Kernoberseite (4) wenigstens eine Vertiefung (8) aufweist,
b) Einbringen eines Füllelementes (10) in die wenigstens eine Vertiefung (8), **dadurch gekennzeichnet, dass** das Einbringen des Füllelementes mittels wenigstens eines 3D-Druckers erfolgt.

2. Verfahren nach Anspruch 1, **dadurch gekennzeichnet, dass** das eingebrachte Füllelement (10) eine Elementenoberseite aufweist, die zumindest teilweise bündig mit der Kernoberseite (4) abschließt oder aus ihr hervorragt.

3. Verfahren nach Anspruch 1 oder 2, **dadurch gekennzeichnet, dass** die wenigstens eine Vertiefung (8) in der Kernoberseite (4) eingeprägt oder eingefräst wird.

4. Verfahren nach einem der vorstehenden Ansprüche, **dadurch gekennzeichnet, dass** die Elementenoberseite mittels des 3D-Druckers strukturiert wird.

5. Verfahren nach einem der vorstehenden Ansprüche, **dadurch gekennzeichnet, dass** das Füllelement (10) zumindest teilweise mit wenigstens einer Materialschicht abgedeckt wird.

6. Verfahren nach Anspruch 5, **dadurch gekennzeichnet, dass** die wenigstens eine Materialschicht mittels eines 3D-Druckers aufgebracht wird.

7. Verfahren nach einem der vorstehenden Ansprüche, **dadurch gekennzeichnet, dass** für das Füllelement (10) ein Füllmaterial verwendet wird, das Glas, Keramik, Kunststoff, Kunstharz, Metall und/oder flüssiges Holz aufweist.

8. Verfahren nach einem der vorstehenden Ansprüche, **dadurch gekennzeichnet, dass** die Kernoberseite (4) und/oder die Elementenoberseite mit wenigstens einer Funktionsschicht beschichtet werden, die mit elektrischen Anschlüssen versehen wird.

9. Verfahren nach einem der vorstehenden Ansprüche, **dadurch gekennzeichnet, dass** in der wenigstens eine Vertiefung (8) wenigstens ein Funktionselement positioniert wird, bevor das Füllelement (10) eingebracht wird.

10. Verfahren nach Anspruch 9, **dadurch gekennzeichnet, dass** das wenigstens eine Funktionselement wenigstens ein Beleuchtungselement aufweist, das mit elektrischen Anschlüssen versehen wird.

11. Verfahren nach Anspruch 10, **dadurch gekennzeichnet, dass** das wenigstens eine Beleuchtungselement eine Leuchtdiode (LED) und/oder eine organische Leuchtdiode (OLED) aufweist.

12. Verfahren nach einem der Ansprüche 9 bis 11, **dadurch gekennzeichnet, dass** das wenigstens eine Funktionselement wenigstens einen Sensor, insbesondere einen Drucksensor, aufweist.

## Claims

1. Method for producing a decorative panel (1), in particular a floor panel, which has a core (2) with a core upper side (4), having the steps:
a) provision of a core (2) which has at least one depression (8) in the core upper side (4),
b) introduction of a filling element (10) into the at least one depression (8), **characterized in that** the introduction of the filling element takes place by means of at least one 3D printer.

2. Method according to Claim 1, **characterized in that** the introduced filling element (10) has an element upper side which terminates at least partially flush with the core upper side (4) or protrudes out of it.

3. Method according to Claim 1 or 2, **characterized in that** the at least one depression (8) in the core upper side (4) is engraved or milled.

4. Method according to one of the preceding claims, **characterized in that** the element upper side is structured by means of the 3D printer.

5. Method according to one of the preceding claims, **characterized in that** the filling element (10) is covered at least partially with at least one material layer.

6. Method according to Claim 5, **characterized in that** the at least one material layer is applied by means of a 3D printer.

7. Method according to one of the preceding claims, **characterized in that** a filling material which comprises glass, ceramic, plastic, synthetic resin, metal and/or liquid wood is used for the filling element (10).

8. Method according to one of the preceding claims, **characterized in that** the core upper side (4) and/or the element upper side are/is coated with at least one functional layer which is provided with electrical connectors.

9. Method according to one of the preceding claims, **characterized in that** at least one functional element is positioned in the at least one depression (8) before the filling element (10) is introduced.

10. Method according to Claim 9, **characterized in that** the at least one functional element has at least one illumination element which is provided with electrical connectors.

11. Method according to Claim 10, **characterized in that** the at least one illumination element has a light-emitting diode (LED) and/or an organic light-emitting diode (OLED).

12. Method according to one of Claims 9 to 11, **characterized in that** the at least one functional element has at least one sensor, in particular a pressure sensor.

## Revendications

1. Procédé de fabrication d'un panneau décoratif (1), en particulier d'un panneau de plancher, qui comprend un noyau (2) présentant une face supérieure de noyau (4), comprenant les étapes suivantes consistant à
a) fournir un noyau (2) qui présente au moins un renfoncement (8) dans la face supérieure de noyau (4),
b) introduire un élément de remplissage (10) dans ledit au moins un renfoncement (8),
**caractérisé en ce que** l'introduction de l'élément de remplissage s'effectue au moyen d'au moins une imprimante 3D.

2. Procédé selon la revendication 1,
**caractérisé en ce que**
l'élément de remplissage (10) introduit présente une face supérieure d'élément qui se termine au moins partiellement en affleurement avec la face supérieure de noyau (4) ou qui en dépasse.

3. Procédé selon la revendication 1 ou 2,
**caractérisé en ce que**
ledit au moins un renfoncement (8) est embouti ou fraisé dans la face supérieure de noyau (4).

4. Procédé selon l'une au moins des revendications précédentes, **caractérisé en ce que**
la face supérieure d'élément est structurée au moyen de l'imprimante 3D.

5. Procédé selon l'une au moins des revendications précédentes, **caractérisé en ce que**
l'élément de remplissage (10) est recouvert au moins partiellement avec au moins une couche de matériau.

6. Procédé selon la revendication 5,
**caractérisé en ce que**
ladite au moins une couche de matériau est appliquée au moyen d'une imprimante 3D.

7. Procédé selon l'une au moins des revendications précédentes, **caractérisé en ce que**
pour l'élément de remplissage (10) on utilise un matériau de remplissage qui comprend du verre, de la céramique, de la matière plastique, de la résine synthétique, du métal et/ou du bois liquide.

8. Procédé selon l'une au moins des revendications précédentes, **caractérisé en ce que**
la face supérieure de noyau (4) et/ou la face supérieure d'élément est revêtue d'au moins une couche fonctionnelle qui est pourvue de bornes électriques.

9. Procédé selon l'une au moins des revendications précédentes, **caractérisé en ce que**
dans ledit au moins un renfoncement (8), on positionne au moins un élément fonctionnel avant d'introduire l'élément de remplissage (10).

10. Procédé selon la revendication 9,
**caractérisé en ce que**
ledit au moins un élément fonctionnel est pourvu d'au moins un élément d'éclairage qui est pourvu de bornes électriques.

11. Procédé selon la revendication 10,
**caractérisé en ce que**
ledit au moins un élément d'éclairage comprend une diode électroluminescente (LED) et/ou une diode électroluminescente organique (OLED).

12. Procédé selon l'une des revendications 9 à 11,
**caractérisé en ce que**
ledit au moins un élément fonctionnel comprend au moins un capteur, en particulier un capteur de pression.
